# EUROPEAN PATENT APPLICATION

(11) **EP 1 398 513 A2**
(43) Date of publication of application: **17.03.2004**
(21) Application number: 03077482.2
(22) Date of filing: 08.08.2003
(51) Int. Cl.: F15B 13/00

(54) **Hydraulic interface plate**

(30) Priority: 10.09.2002 US 238477
(71) Applicant: Delphi Technologies, Inc., Troy, MI 48007 (US)
(72) Inventor: Subramanian, Viswanathan, El Paso, TX 79912 (US); Barron, Luis F., El Paso, TX 79912 (US)
(74) Representative: Denton, Michael John

(57) **Abstract**

A hydraulic interface plate (14) is a generally flat plate that defines an upper surface (34) and a lower surface (36). An upper fluid routing channel (48) is formed in the upper surface (34) of the interface plate (14). Moreover, a lower fluid routing channel (56) is formed in the lower surface (36) of the interface plate (14). A fluid interface port (50) connects the upper fluid routing channel (48) to the lower fluid routing channel (56). The upper fluid routing channel (48) is configured to communicate with a solenoid fluid port (40) established by a solenoid assembly module (12). Also, the lower fluid routing channel (56) is configured to communicate with a transmission fluid channel (58) established by a vehicle transmission (18).

## Description

### TECHNICAL FIELD

The present invention relates to motor vehicle sensors and actuators.

### BACKGROUND OF THE INVENTION

Automobiles equipped with automatic transmissions have become ubiquitous. A conventional automatic transmission includes a planetary gearset, a set of bands used to engage parts of the gearset, a set of wet-plate clutches to engage other parts of the gears, a hydraulic system controlling the clutches and bands, and a transmission fluid pump. Numerous solenoid valves or actuators are used to control the flow of transmission fluid through the automatic transmission.

Oftentimes, the solenoid valves are arranged in an array to form a solenoid assembly module. A typical solenoid assembly module consists of plural solenoid valves and sensors that are mounted on a single mounting plate. One side of the mounting plate is formed with fluid ports that are aligned with outlet ports from the solenoids. The other side of the plate is formed with fluid channels that are in fluid communication with the fluid ports. When bolted or otherwise attached to a transmission, the fluid channels on the mounting plate are aligned with corresponding fluid channels in the transmission and the individual solenoids are in fluid communication with the transmission via the mounting plate.

Typically, the configuration of the solenoid assembly module is customer specific, i.e., the channels in the mounting plate are established based on the type of transmission to which the solenoid assembly module is to be mounted. As such, a particular solenoid assembly module configured for a particular transmission fluid channel configuration cannot be used with a transmission having a different fluid channel configuration. Moreover, the overall size of the solenoid assembly module is determined mostly by the layout of the channels, which can result in a module that utilizes space that could otherwise be used for other components.

As such, the present invention has recognized these prior art drawbacks, and has provided the below-disclosed solutions to one or more of the prior art deficiencies.

### SUMMARY OF THE INVENTION

A hydraulic interface plate for use with a motor vehicle transmission includes an interface plate that defines an upper surface and a lower surface. An upper fluid routing channel is formed in the upper surface of the plate. A lower fluid routing channel is formed in the lower surface of the plate. A fluid interface port connects the upper fluid routing channel to the lower fluid routing channel.

In a preferred embodiment, the upper fluid routing channel is configured to communicate with a solenoid fluid port established by a solenoid assembly module. Moreover, the lower fluid routing channel is configured to communicate with a transmission fluid channel established by a vehicle transmission. Preferably, the interface plate defines an outer perimeter that is configured to match an outer perimeter established by a solenoid mounting plate.

In another aspect of the present invention, a vehicle transmission control system includes a transmission that forms a transmission fluid channel. A solenoid assembly module is attached to the transmission and forms a solenoid fluid port. In this aspect, a hydraulic interface plate is mounted between the solenoid assembly module and the transmission. The hydraulic interface plate routes fluid from the solenoid fluid port to the transmission fluid channel.

In yet another aspect of the present invention, a fluid control system includes a fluid device that establishes a fluid channel. A solenoid assembly module is attached to the fluid device. The solenoid assembly module forms a solenoid fluid port. A hydraulic interface plate is mounted between the solenoid assembly module and the fluid device. The hydraulic interface plate routes fluid from the solenoid fluid port to the transmission fluid channel.

The present invention will now be described, by way of example, with reference to the accompanying drawings, in which:

### BRIEF DESCRIPTION OF THE DRAWINGS

Figure 1 is a perspective view of a hydraulic control system;
Figure 2 is a bottom plan view of a solenoid assembly module;
Figure 3 is a top plan view of a hydraulic interface plate;
Figure 4 is a bottom plan view of the hydraulic interface plate; and
Figure 5 is a top plan view of a transmission mounting plate.

### DESCRIPTION OF AN EMBODIMENT OF THE INVENTION

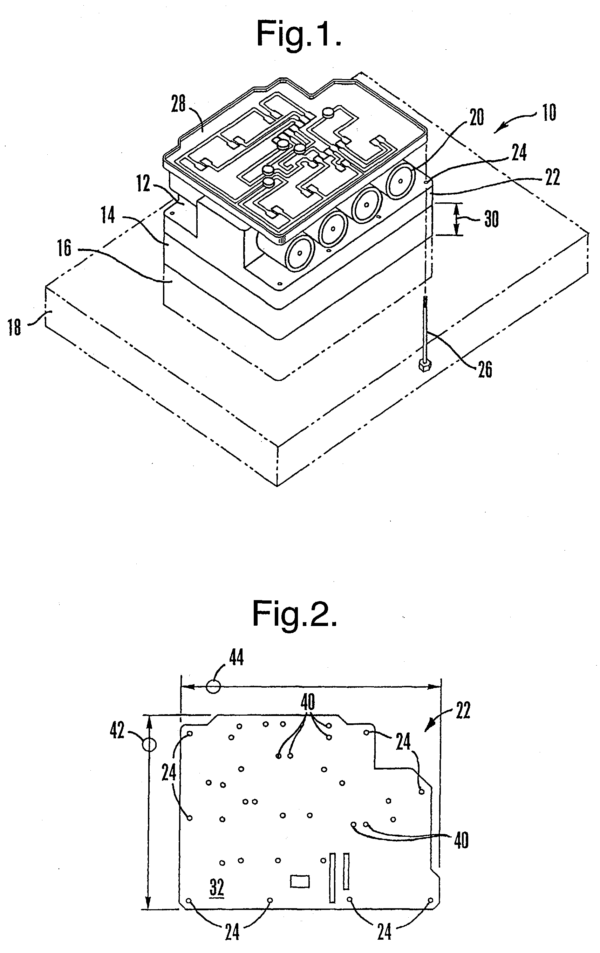

Referring initially to Figure 1, a hydraulic control system is shown and generally designated 10. Figure 1 shows that the system 10 includes a solenoid assembly module 12 and a hydraulic interface plate 14 that are bolted or otherwise affixed to a transmission mounting plate 16 that extends from a vehicle transmission 18. It can be appreciated that the solenoid assembly module 12 and hydraulic interface plate 14 can be attached to any other hydraulic device that requires an array of solenoid valves to control the flow of fluid thereto.

Figure 1 shows that the solenoid assembly module 12 includes plural solenoid valves 20 that are attached to a solenoid mounting plate 22. The solenoid mounting plate 22 is formed with plural threaded solenoid mounting plate fastener holes 24 and a threaded fastener 26, e.g., a bolt, threadably engages each threaded solenoid mounting plate faster hole 24. A molded lead frame 28 is mounted above and electrically connected to the solenoid valves 20. As shown in Figure 1, the hydraulic interface plate 14 defines a thickness 30.

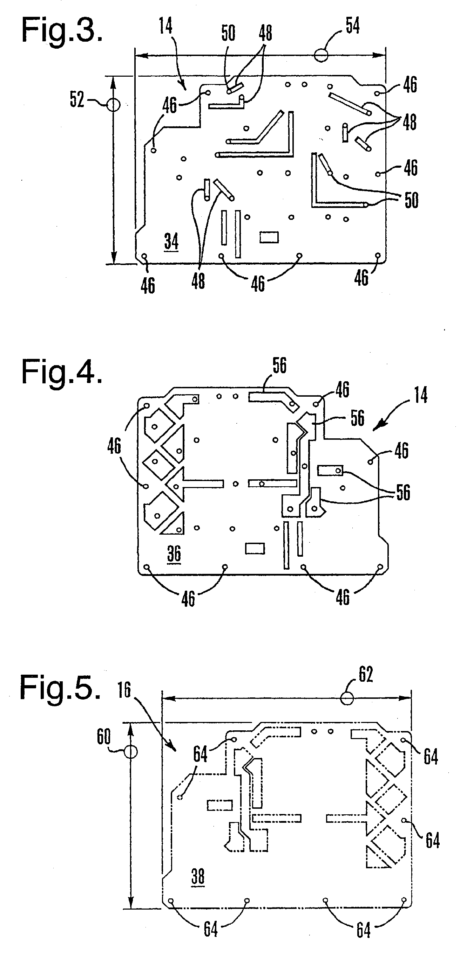

Referring now to Figures 2 through 5, it is shown that the solenoid mounting plate 22 defines a lower surface 32 (Figure 2). The interface plate 14 defines an upper surface 34 (Figure 3) and a lower surface 36 (Figure 4). Also, the transmission mounting plate 16 defines an upper surface 38 (Figure 5). It is to be understood that when the system 10 is assembled, the lower surface 32 of the solenoid mounting plate 22 mates with the upper surface 34 of the interface plate 14 and the lower surface 36 of the interface plate 14 mates with the upper surface 38 of the mounting plate 16.

Figure 2 shows that the solenoid mounting plate 22 is formed with plural solenoid fluid ports 40 that are in fluid communication with the solenoid valves 20. In a preferred embodiment, the solenoid fluid ports 40 are bored perpendicular to the bottom surface 32 of the solenoid mounting plate 22. As further shown in Figure 2, the solenoid mounting plate 22 has an overall width 42 and an overall length 44. These dimensions are approximately equal to the below described dimensions of the interface plate 14 and the transmission mounting plate 16.

Referring to Figures 3 and 4, it is shown that the interface plate 14 is also formed with plural interface plate fastener holes 46. The interface plate fastener holes 46 are formed in the interface plate 14 so that they can be aligned with the threaded solenoid mounting plate fastener holes 24 during assembly. It is to be understood that the threaded fasteners 26 are inserted through the interface plate fastener holes 46 when threadably engaged with the threaded solenoid mounting plate fastener holes 24.

Referring now only to Figure 3, it is shown that the hydraulic interface plate 14 includes plural upper fluid routing channels 48 that are milled or otherwise formed laterally in the upper surface 34 of the interface plate 14. It can be appreciated that the upper fluid routing channels 48 can have different shapes and sizes, as shown in Figure 3. As further shown, the hydraulic interface plate 14 includes plural interface fluid ports 50. Preferably, each interface fluid port 50 is bored perpendicularly to the upper surface 34 of the hydraulic interface plate 14 and is located within a respective fluid routing channel 48. Figure 3 also shows that the hydraulic interface plate 14 defines an overall width 52 and an overall length 54. These dimensions are approximately equal to the width 42 and length 44 of the solenoid mounting plate 22. Moreover, in a preferred embodiment, the shape of the perimeter of the hydraulic interface plate 14 is the same as the shape of the perimeter of the solenoid mounting plate 22. However, it can be appreciated that the interface plate 14 can have a different outer perimeter geometry than the solenoid mounting plate 22.

Figure 4 shows that the hydraulic interface plate 14 further includes plural lower fluid routing channels 56 that are milled or otherwise formed laterally in the lower surface 36 of the hydraulic interface plate. As shown, the lower fluid routing channels 56 can have different shapes and sizes and are configured to mate with transmission fluid channels 58 (Figure 5) formed in the transmission mounting plate 16. Figure 4 shows that the interface fluid ports 50, described above, lead from the upper fluid routing channels 48 to the lower fluid routing channels 56. It can be appreciated that the thickness 30 (Figure 1) of the hydraulic interface plate 14 is dependant on the depth of the fluid routing channels 48, 56.

Figure 5 shows that the transmission mounting plate 16 has an overall width 60 and overall length 62 that are approximately equal to the widths 42, 52 and lengths 44, 54 of the solenoid mounting plate 22 and the hydraulic interface plate 14. Also, the transmission mounting plate 16 is formed with plural transmission mounting plate fastener holes 64 through which the threaded fasteners 26 are also inserted when properly engaged with the threaded solenoid mounting plate fastener holes 24. It can be appreciated that the solenoid mounting plate fastener holes 24 can be smooth-bored while the transmission mounting plate fastener holes 64 can be threaded. Thus, the threaded fasteners 26 can be inserted through the solenoid mounting plate 22 and the interface plate 14 in order to attached the plates 22, 24 to the transmission mounting plate 16.

With the configuration of structure described above, it can be appreciated that the interface plate 14 is in fluid communication with the solenoid valves 20 mounted on the solenoid mounting plate 22 and the transmission 18. It is to be understood that the interface plate 14 transmits fluid from the individual solenoid valves 20 to the transmission through the upper fluid routing channels 48, the interface ports 50, and the lower fluid routing channels 56. Thus, the positioning of the solenoid valves 20 on the solenoid mounting plate 22 and other components can be based more on the optimal usage of the available space and less on the channels 56 formed in the transmission plate 16. Moreover, the solenoid assembly module 12 can be standardized while the hydraulic interface plate 14, specifically the location, the size, and the shape of the upper and lower fluid routing channels 48, 56 and the interface ports 50, can be varied to match transmission mounting plates 16 of varying configurations.

While the particular HYDRAULIC INTERFACE PLATE as herein shown and described in detail is fully capable of attaining the above-described objects of the invention, it is to be understood that it is the presently preferred embodiment of the present invention and thus, is representative of the subject matter which is broadly contemplated by the present invention, that the scope of the present invention fully encompasses other embodiments which may become obvious to those skilled in the art, and that the scope of the present invention is accordingly to be limited by nothing other than the appended claims, in which reference to an element in the singular is not intended to mean "one and only one" unless explicitly so stated, but rather one or more." All structural and functional equivalents to the elements of the above-described preferred embodiment that are known or later come to be known to those of ordinary skill in the art are expressly incorporated herein by reference and are intended to be encompassed by the present claims. Moreover, it is not necessary for a device or method to address each and every problem sought to be solved by the present invention, for it is to be encompassed by the present claims. Furthermore, no element, component, or method step in the present disclosure is intended to be dedicated to the public regardless of whether the element, component, or method step is explicitly recited in the claims. No claim element herein is to be construed under the provisions of 35 U.S.C. section 112, sixth paragraph, unless the element is expressly recited using the phrase "means for."

## Claims

1. A hydraulic interface plate (14) for use with a motor vehicle transmission (18), comprising:
an interface plate (14) defining an upper surface (34) and a lower surface (36);
at least one upper fluid routing channel (48) formed in the upper surface (34) of the interface plate (14);
at least one lower fluid routing channel (56) formed in the lower surface (36) of the interface plate (14); and
at least one fluid interface port (50) connecting the upper fluid routing channel (48) to the lower fluid routing channel (56).

2. The interface plate (14) of Claim 1, wherein the upper fluid routing channel (48) is configured to communicate with at least one solenoid fluid port (40) established by a solenoid assembly module (12).

3. The interface plate (14) of Claim 2, wherein the lower fluid routing channel (56) is configured to communicate with at least one transmission fluid channel (58) established by a vehicle transmission (18).

4. The interface plate (14) of Claim 3, wherein the interface plate (14) defines an outer perimeter that is configured to match an outer perimeter established by a solenoid mounting plate (22).

5. A vehicle transmission control system, comprising:
at least one transmission (18) forming a transmission fluid channel (58);
at least one solenoid assembly module (12) attached to the transmission (18), the solenoid assembly module (12) forming at least one solenoid fluid port (40); and
at least one hydraulic interface plate (14) mounted between the solenoid assembly module (12) and the transmission (18), the hydraulic interface plate (14) routing fluid from the solenoid fluid port (40) to the transmission fluid channel (58).

6. The system of Claim 5, wherein the hydraulic interface plate (14) comprises:
an interface plate (14) defining an upper surface (34) and a lower surface (36);
at least one upper fluid routing channel (48) formed in the upper surface (34) of the interface plate (14);
at least one lower fluid routing channel (56) formed in the lower surface (36) of the interface plate (14); and
at least one fluid interface port (50) connecting the upper fluid routing channel (48) to the lower fluid routing channel (56).

7. The system of Claim 6, wherein the upper fluid routing channel (48) is configured to communicate with the solenoid fluid port (40).

8. The system of Claim 7, wherein the lower fluid routing channel (56) is configured to communicate with the transmission fluid channel (58).

9. The system of Claim 8, wherein the solenoid assembly module (12) comprises a solenoid mounting plate (22) that defines an outer perimeter and the hydraulic interface plate (14) defines an outer perimeter that is configured to match the outer perimeter of the solenoid mounting plate (22).

10. A fluid control system, comprising:
at least one fluid device establishing a fluid channel;
at least one solenoid assembly module (12) attached to the fluid device, the solenoid assembly module (12) forming at least one solenoid fluid port (40); and
at least one hydraulic interface plate (14) mounted between the solenoid assembly module (12) and the fluid device, the hydraulic interface plate (14) routing fluid from the solenoid fluid port (40) to the transmission fluid channel (58).

11. The system of Claim 10, wherein the hydraulic interface plate (14) comprises:
an interface plate defining an upper surface (34) and a lower surface (36);
at least one upper fluid routing channel (48) formed in the upper surface (34) of the interface plate (14);
at least one lower fluid routing channel (56) formed in the lower surface (36) of the interface plate (14); and
at least one fluid interface port (50) connecting the upper fluid routing channel (48) to the lower fluid routing channel (56).

12. The system of Claim 11, wherein the upper fluid routing channel (48) is configured to communicate with the solenoid fluid port (40).

13. The system of Claim 12, wherein the lower fluid routing channel (56) is configured to communicate with the transmission fluid channel (58).

14. The system of Claim 13, wherein the solenoid assembly module (12) comprises a solenoid mounting plate (22) that defines an outer perimeter and the interface plate (14) defines an outer perimeter that is configured to match the outer perimeter of the solenoid mounting plate (22).

15. The system of Claim 10, wherein the fluid device is a vehicle transmission (18).
